# EUROPÄISCHE PATENTSCHRIFT

(11) **EP 1 065 226 B1**
(45) Veröffentlichungstag und Bekanntmachung des Hinweises auf die Patenterteilung: **16.08.2001**
(21) Anmeldenummer: 00111073.3
(22) Anmeldetag: 02.06.2000
(51) Int. Cl.: C08F 212/04

(54) **Verfahren zur Herstellung von in Wasser redispergierbaren Vinylaromat-Mischpolymerisat-Redispersionspulvern**
Process for preparing redispersible powders of redispersible copolymers of vinylaromatic monomers
Procédé de préparation de poudres redispersables à l'eau de copolymères redispersables de monomères vinylaromatiques

(30) Priorität: 24.06.1999 DE 19929008
(43) Veröffentlichungstag der Anmeldung: 03.01.2001
(73) Patentinhaber: Wacker Polymer Systems GmbH & Co. KG, 84489 Burghausen (DE)
(72) Erfinder: Mayer, Theo, Dr., 84387 Julbach (DE)
(74) Vertreter: Schuderer, Michael, Dr.

(56) Entgegenhaltungen:
- EP-A- 0 007 044
- DE-A- 19 617 716
- US-A- 4 169 828

## Beschreibung

Die Erfindung betrifft ein Verfahren zur Herstellung von in Wasser redispergierbaren Vinylaromat-Mischpolymerisat-Redispersionspulvern sowie die Verwendung der Verfahrensprodukte.

In Wasser redispergierbare Polymerpulver, welche durch Trocknung der entsprechenden Polymerdispersionen zugänglich sind, sind bekannt und werden seit vielen Jahren insbesondere im Bausektor mit Erfolg eingesetzt. Sie verbessern das Eigenschaftsbild von hydraulisch abbindenden Systemen wie Zementmörteln, beispielsweise deren Abriebsbeständigkeit, Biegezugfestigkeit und Haftung. Üblicherweise, und solche Produkte sind am Markt vertreten, werden solche Produkte auf Basis Polyvinylacetat, Vinylacetat-Ethylen-Copolymere, Vinylacetat-Vinylester-Copolymere und Vinylchlorid-Ethylen-Copolymere hergestellt.

Die Anforderungen, die an ein technisch brauchbares Dispersionspulver gestellt werden, sind sehr hoch: Es muß rieselfähig sein, es darf beim Lagern nicht zusammenblocken, das heißt, es darf seine Rieselfähigkeit nicht mit der Zeit verlieren. Verblockt das Pulver, kann es praktisch nicht mehr gehandhabt werden. Große Klumpen können nicht mehr in die pulverförmige Rezeptur eingemischt werden. Um seine volle Wirksamkeit zu entfalten, muß das Pulver in Wasser wieder sehr gut redispergierbar sein, so daß die Ausgangsteilchen der Dispersion erhalten werden.

Um Verblocken unter Druck und Temperatur bei der Lagerung des Redispersionspulvers zu vermeiden und gleichzeitig sehr gutes Redispersionseigenschaften in Wasser zu erreichen, werden die sogenannten Pulverbasisdispersionen im allgemeinen mit nicht unerheblichen Mengen an Antiblockmittel und Schutzkolloiden versetzt. Um sehr gut redispergierbare polymere Pulver zu erhalten, wird in der US-A 3784648 vor der Trocknung die Dispersion mit Melaminformaldehydsulfonat-Kondensationsprodukte versetzt. In der DE-A 3143070 wird vor der Dispersionstrocknung die Zugabe von Naphtalinformaldehydsulfonaten, in der EP-A 78449 die Zugabe von Vinylpyrrolidone-Vinylacetat-Copolymeren und in der WO-A 97/25371 die Zugabe von Aminosäuren oder deren wasserlöslichen Salze empfohlen.

In bestimmten Anwendungen, insbesondere für wässrige Dispersionen von Styrolcopolymerisaten ist die Anwesenheit von Schutzkolloiden nicht erwünscht, da dadurch die anwendungstechnischen Eigenschaften der Styrolcopolymerisate negativ beeinflußt werden. Es bestand daher die Aufgabe ein Verfahren zur Herstellung von emulgatorstabilisierten, schutzkolloidfreien Redispersionspulvern auf Basis von Vinylaromat-Copolymerisaten zur Verfügung zu stellen, mit dem auch ohne die Zugabe von Schutzkolloiden als Verdüsungshilfe ein redispergierbares, agglomeratfreies, block- und lagerstabiles Redispersionspulver erhalten werden kann.

Die Aufgabe konnte durch Zugabe von Hydroxycarbonsäure zu der zu trocknenden Polymerdispersion gelöst werden. Bisher war aus der EP-A 234393 (US-A 4774271) nur bekannt, daß zur Trocknung von Dispersionen, welche Schlagzähmodifier in Form von Pfropfpolymerisaten auf Kautschukgrundlage enthalten, Tricarbonsäuren oder deren Derivate zugegeben werden -können. Redispersionspulver und deren Herstellung werden in dieser Anmeldung nicht behandelt. Aus der WO-A 97/42255 ist bekannt, zur Herstellung von Redispersionspulvern für kosmetische oder pharmazeutische Anwendungen, diese in pH-Bereichen von 2.0 bis 6.5 oder 7.5 bis 12 zu trocknen, wobei die pH-Werte durch Zugabe von Puffersystemen eingestellt werden. Die DE-C 3917646 beschreibt die Verwendung von Hydroxycarbonsäuren als Agglomerationshilfsmittel zur Agglomerierung der Feinanteile von synthetischen, pulverförmigen Polymerisaten.

Gegenstand der Erfindung ist ein Verfahren zur Herstellung von in Wasser redispergierbaren Vinylaromat-Mischpolymerisat-Redispersionspulvern mittels radikalisch initiierter Emulsionspolymerisation eines Comonomergemisches enthaltend
a) ein oder mehrere Vinylaromat-Comonomere,
b) ein oder mehrere 1,3-Dien-Comonomere (b1) oder ein oder mehrere Comonomere (b2) aus der Gruppe der Alkylester mit 1 bis 8 C-Atomen von Acrylsäure oder Methacrylsäure, und
c) 0.1 bis 10 Gew.-%, bezogen auf das Gesamtgewicht des Comonomergemisches, ein oder mehrere Comonomere aus der Gruppe der ethylenisch ungesättigen Mono- oder Dicarbonsäuren oder deren Anhydride, der ethylenisch ungesättigten Carbonsäureamide, der ethylenisch ungesättigten Sulfonsäureverbindungen, sowie jeweils deren Salze,
und Trocknung der damit erhältlichen wässrigen Copolymerdispersion, wobei vor oder während der Polymerisation oder vor der Trocknung ein oder mehrere Hydroxycarbonsäuren oder deren Salze in einer Menge von 3 bis 40 Gew.-%, bezogen auf den Copolymeranteil, zugegeben werden.

Geeignete Vinylaromatcomonomere a) sind Styrol, Methylstyrol und Vinyltoluol, wobei Styrol bevorzugt wird. Geeignete 1,3-Dien-Comonomere (b1) sind 1,3-Butadien und Isopren, wobei 1,3-Butadien bevorzugt wird. Geeignete Comonomere (b2) aus der Gruppe der Alkylester von (Meth)acrylsäure sind beispielsweise Methylmethacrylat, Methylacrylat, n-Butylmethacrylat, n-Butylacrylat, Ethylmethacrylat, Ethylacrylat, 2-Ethylhexylmethacrylat, 2-Ethylhexylacrylat. Bevorzugt werden Methylmethacrylat, Ethylacrylat, n-Butylacrylat, 2-Ethylhexylacrylat, besonders bevorzugt ist n-Butylacrylat.

Beispiele für Comonomer c) sind aus der Gruppe der Carbonsäuren und deren Anhydride Acrylsäure, Methacrylsäure, Fumarsäure, Itaconsäure, Crotonsäure, Maleinsäure, Mesaconsäure, Glutarsäure, Maleinsäureanhydrid; aus der Gruppe der Carbonsäureamide Acrylamid, Methacrylamid; aus der Gruppe der Sulfonsäuren Vinylsulfonsäure, 2-Acrylamidopropansulfonsäure. Bevorzugt werden Acrylsäure, Methacrylsäure, Fumarsäure, Maleinsäure, Maleinsäureanhydrid.

Die Monomerauswahl bzw. die Auswahl der Gewichtsanteile der Comonomere erfolgt dabei so, daß im allgemeinen eine Glasübergangstemperatur Tg von -70°C bis +70°C, vorzugsweise -50°C bis +50°C, insbesondere 0°C bis +25°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = X₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt. Im allgemeinen enthält das Comonomergemisch 20.0 bis 79.9 Gew.-%, vorzugsweise 30 bis 69.9 Gew.-%, Vinylaromat a) und 20 bis 79.9 Gew.-%, vorzugsweise 30 bis 69.9 Gew.-%, 1,3-Dien (bl) oder (Meth)acrylsäureester (b2). Der Anteil an Comonomer c) beträgt 0.1 bis 10 Gew.-%, vorzugsweise 2 bis 5 Gew.-%, jeweils bezogen auf das Gesamtgewicht des Comonomergemisches.
Geeignete Hydroxycarbonsäuren sind organische Säuren, die neben einer oder mehreren COOH-Gruppen eine oder mehrere OH-Gruppen im Molekül enthalten. Bevorzugt werden Monohydroxy-und Dihydroxyderivate von Mono-, Di- oder Tricarbonsäuren mit im allgemeinen 2 bis 10 C-Atomen. Besonders bevorzugt werden Mandelsäure (Hydroxyphenylessigsäure), Milchsäure (2-Hydroxypropionsäure), Äpfelsäure (Hydroxybernsteinsäure), Weinsäure (2,3-Dihydroxybutandisäure)und Citronensäure. Am meisten bevorzugt wird die Citronensäure (2-Hydroxy-1,2,3-propantricarbonsäure) eingesetzt. Die Hydroxycarbonsäuren können auch in Form eines ihrer Salze eingesetzt werden und hier insbesondere in Form wasserlöslicher oder wässrig-alkalisch-löslicher Salze. Dabei kann es sich zum Beispiel um Natriumsalze, Kaliumsalze, Ammoniumsalze oder Calciumsalze handeln. Vorzugsweise beträgt der Anteil an Hydroxycarbonsäure 7 bis 30 Gew.-%, bezogen auf den Copolymeranteil.
Die Herstellung der emulgatorstabilisierten Vinylaromat-Mischpolymerisate erfolgt nach dem Emulsionspolymerisationsverfahren, wobei die Polymerisationstemperatur im allgemeinen 0°C bis 100°C, vorzugsweise 50°C bis 80°C beträgt. Die Polymerisation kann im Batchverfahren, wobei alle Komponenten im Reaktor vorgelegt werden, und im Dosierverfahren, wobei einzelne oder mehrere Komponenten während der Polymerisation zugeführt werden, durchgeführt werden. Mischtypen mit Vorlage und Dosierung werden bevorzugt. Die Dosierungen können separat (räumlich und zeitlich) durchgeführt werden oder die zu dosierenden Komponenten können alle oder teilweise voremulgiert dosiert werden.

Als Dispergiermittel können alle üblicherweise bei der Emulsionspolymerisation verwendeten Emulgatoren eingesetzt werden, wobei als Dispergiermittel keine Schutzkolloide eingesetzt werden. Geeignete Emulgatoren sind sowohl anionische, kationische als auch nichtionische Emulgatoren. Vorzugsweise werden die Emulgatoren in einer Menge von 0.1 bis 5 Gew.-%, bezogen auf das Gesamtgewicht der Monomeren eingesetzt. Geeignet sind beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxid-Einheiten.

Die Initiierung erfolgt mittels der gebräuchlichen, zumindest teilweise wasserlöslichen Radikalbildner, die vorzugsweise in Mengen von 0.01 bis 3.0 Gew.-%, bezogen auf das Gesamtgewicht der Monomeren, eingesetzt werden. Beispiele hierfür sind Natriumpersulfat, Wasserstoffperoxid, t-Butylperoxid, t-Butylhydroperoxid, Kaliumperoxodisulfat, Azobisisobutyronitril. Gegebenenfalls können die genannten radikalischen Initiatoren auch in bekannter Weise mit 0.01 bis 3.0 Gew.-%, bezogen auf das Gesamtgewicht der Monomeren, Reduktionsmittel kombiniert werden. Geeignet sind zum Beispiel Alkaliformaldehydsulfoxylate und Ascorbinsäure. Bei der Redoxinitierung werden dabei vorzugsweise eine oder beide Redox-Katalysatorkomponenten während der Polymerisation dosiert.

Zur Molekulargewichtseinstellung bzw. zur Einstellung des Vernetzungsgrades, wie zum Beispiel bei der Polymerisation von Styrol/Butadien-Copolymeren, können bei der Polymerisation die üblicherweise verwendeten Regler, zum Beispiel n-Dodecylmercaptan, t-Dodecylmercaptan, Mercaptopropionsäure, Mercaptopropionsäuremethylester, Isopropanol und Acetaldehyd, vorzugsweise in Mengen von 0.1 bis 3.0 Gew.%, bezogen auf das Gesamtgewicht der Monomeren, zugesetzt werden.

Die mit dem erfindungsgemäßen Verfahren erhältlichen wässrigen Dispersionen haben einen Feststoffgehalt von 30 bis 75 Gew.-%, vorzugsweise von 40 bis 65 Gew.-%. Die Teilchengröße der Dispersionsteilchen liegt zwischen 0.05 und 5 µm, vorzugsweise zwischen 0.1 und 0.3 µm.

Die Zugabe des Hydroxycarbonsäureanteils kann vor oder während der Polymerisation oder nach Abschluß der Polymerisation vor der Trocknung erfolgen. Bevorzugt wird die Hydroxycarbonsäure als wässrige Lösung nach Abschluß der Polymerisation und vor der Trocknung der Copolymerdispersion zugegeben. Die erhaltene Mischung hat vor der Verdüsung vorzugsweise einen Gesamtfeststoffgehalt von 25 bis 50 Gew.-%, einen pH-Wert von vorzugsweise 6.7 bis 7.5, und eine Brookfield-Viskosität (20 Upm) von vorzugsweise 100 bis 3000 mPas aufweisen.

Zur Herstellung der in Wasser redispergierbaren Polymerpulvern werden die wässrigen Dispersionen getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Glasübergangstemperatur des Harzes und gewünschtem Trocknungsgrad, gewählt.

Zur Trocknung können gegebenenfalls wasserlösliche Polymerisate, beispielsweise aus der Gruppe der Polyvinylalkohole, Stärken, Cellulosen, Casein, Melaminformaldehydsulfonat, Naphthalinformaldehydsulfonate, Poly(meth)acrylsäure als Verdüsungshilfe, zugegeben werden. Bevorzugt wird die Trocknung ohne Zugabe von Verdüsungshilfen.

Gegebenenfalls kann die Pulverzusammensetzung noch mit weiteren Zusatzstoffen modifiziert werden. Beispiele hierfür sind Antiblockmittel, Farbstoffe, Pigmente, Weichmacher, Verfilmungshilfsmittel, Antischaummittel, Katalysatoren, Rheologiehilfsmittel, Verdickungsmittel, Haftmittel und Emulgatoren, wobei diese, falls sie im Originalzustand flüssig sind, vor dem Zumischen in einen pulverförmigen Zustand überführt werden müssen.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, versetzt werden. Beispiele für Antiblockmittel sind Kaolin, Ca- bzw. Mg-Carbonat, Talk, Gips, Kieselsäure, Silicate mit Teilchengrößen vorzugsweise im Bereich von 10 nm bis 10 µm.

Die erfindungsgemäß hergestellten pulverförmigen Zusammensetzung können durch einfaches Einrühren (Dispergieren) in Wasser bei Raumtemperatur vollkommen redispergiert werden. Vollkommen redispergiert heißt, daß durch Zugabe von ausreichenden Mengen Wasser eine polymere Redispersion erhalten wird, deren Teilchengrößeverteilung quasi der Teilchengrößeverteilung der Basisdispersion entspricht.

Die in Wasser redispergierbaren Hydroxycarbonsäure-modifizierten Polymerpulver können in den dafür typischen Anwendungsbereichen eingesetzt werden. Beispielsweise in bauchemischen Produkten in Verbindung mit anorganischen, hydraulisch abbindenden Bindemitteln wie Zement (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Betonreparaturmörtel, Fugenmörtel und Farben. Ferner als Alleinbindemittel für Beschichtungsmittel und Klebemittel oder als Beschichtungs- und Bindemittel für Textilien und Papier.

Die im folgenden aufgeführten Beispiele sollen die Erfindung veranschaulichen, ohne sie jedoch einzuschränken.

### Beispiel 1:

In ein Glasreaktiongefäß ausgerüstet mit Rührer wurde eine herkömmliche schutzkolloidfreie, emulgatorstabilisierte Polymerdispersion (Coulter LS 230; D_{w}=0.18 *µ*m ± 0.1 *µ*m), hergestellt durch Emulsionspolymerisation von Styrol, 1,3-Butadien, Acrylsäure und einer ethylenisch ungesättigten Dicarboxylsäure, vorgelegt. Unter Rühren wurde die Dispersion mit einer 30 Gew.-%igen wässrigen Citronensäurelösung (2-Hydroxy-1,2,3-propantricarbonsäure) versetzt. Die entsprechenden Mengen wurden dabei so gewählt, daß eine Mischung mit einem Festanteil von 15 Gew.-% (18 Gew.-% bezogen auf Polymeranteil) Citronensäure und 85 Gew.-% filmbildendes Polymer (Harz) erhalten wurde. Anschließend wurde der pH-Wert der Citronensäure-haltigen Dispersion mit einer wässrigen 10 Gew.-%igen Natronlauge auf pH 7.0 eingestellt.
Man erhielt eine stabile, koagulatfreie Mischung, die bei einem Festkörpergehalt von 45 % eine Viskosität (Brookfield-Viskosimeter, 20°C, 20 Upm) von 380 mPas aufwies.
Die Herstellung des Redispersionspulvers erfolgte durch Sprühtrocknung in einer Nubilosa-Sprühtrocknungsanlage bei einer Eintrittstemperatur von 110°C und einer Austrittstemperatur von 80°C und einem Preßluftdruck von 4 bar. Während der Sprühtrocknung der Dispersion wurde ein Kaolin-Pulver mit einer Korngröße von ca. 3 *µ*m zugemischt. Die Menge wurde dabei so gewählt, daß am Ende der Trocknung Kaolin zu 10 Gew.-% in der pulverförmigen Zusammensetzung vorlag. Das erhaltene trockene Pulver wurde zusätzlich mit 20 Gew.-% handelsüblichem Antiblockmittel (Gemisch aus Calcium-Magnesium-Carbonat und Magnesiumhydrosilikat) versetzt.
Das erhaltene Pulver wies eine mittlere Teilchengröße von 85 *µ*m auf. Bezüglich seiner Eigenschaften erwies sich das Pulver als sehr gut rieselfähig, blockstabil (lagerstabil), sehr gut und spontan redispergierbar. Durch Zugabe von Wasser wurde mit dem Pulver eine polymere Redispersion erhalten, deren Teilchengrößeverteilung quasi der Teilchengrößeverteilung der Basisdispersion entsprach. Bezüglich der Zementstabilität und Einfluß auf das Zementabbindeverhalten der Redispersion wurde kein Unterschied zur Pulverbasisdispersion festgestellt.

### Beispiel 2:

Die Herstellung erfolgte analog Beispiel 1 allerdings wurden die Mengen an Styrol-Butadien-Copolymer-Dispersion und Citronensäure so gewählt, daß eine Mischung mit einem Festanteil von 20 Gew.% (25 Gew.-% bezogen auf Polymeranteil) Citronensäure und 80 Gew.% filmbildendes Polymer (Harz) erhalten wurde. Alle anderen Maßnahmen entsprachen Beispiel 1. Man erhielt eine stabile, koagulatfreie Mischung, die bei einem Festkörpergehalt von 44.3 % eine Viskosität (Brookfield-Viskosimeter, 20°C, 20 Upm) von 320 mPas aufwies. Die Sprühtrocknung des Gemisches sowie die Zugabe des Antiblockmittels erfolgte analog Beispiel 1.

Das erhaltene Pulver wies eine mittlere Teilchengröße von 80 *µ*m auf. Bezüglich seiner Eigenschaften erwies sich das Pulver als sehr gut rieselfähig, blockstabil (lagerstabil), sehr gut und spontan redispergierbar. Durch Zugabe von Wasser wurde mit dem Pulver eine polymere Redispersion erhalten, deren Teilchengrößeverteilung quasi der der Basisdispersion entsprach. Bezüglich der Zementstabilität und Einfluß auf das Zementabbindeverhalten der Redispersion wurde kein Unterschied zur Pulverbasisdispersion festgestellt.

### Beispiel 3:

Die Herstellung erfolgte analog Beispiel 1, allerdings wurde die Styrol-Butadien-Copolymer-Dispersion mit Citronensäure und einem Natrium-Polyacrylat mit einer Molmasse von 2000 abgemischt. Die entsprechenden Mengen wurden dabei so gewählt, daß eine Mischung mit einem Festanteil von 10 Gew.-% (12.5 Gew.-% bezogen auf Polymeranteil) Citronensäure, 10 Gew.-% Na-Polyacrylat und 80 Gew.-% filmbildendes Polymer (Harz) erhalten wurde. Alle anderen Maßnahmen entsprachen Beispiel 1. Man erhielt eine stabile, koagulatfreie Mischung, die bei einem Festkörpergehalt von 44.8 % eine Viskosität (Brookfield-Viskosimeter, 20°C, 20 Upm) von 335 mPas aufwies. Die Sprühtrocknung des Gemisches sowie die Zugabe des Antiblockmittels erfolgte analog Beispiel 1.
Das erhaltene Pulver wies eine mittlere Teilchengröße von 90 µm auf. Bezüglich seiner Eigenschaften erwies sich das Pulver als sehr gut rieselfähig, blockstabil (lagerstabil), sehr gut und spontan dis- und redispergierbar. Durch Zugabe von Wasser wurde mit dem Pulver eine polymere Redispersion erhalten, deren Teilchengrößeverteilung quasi der der Basisdispersion entsprach. Bezüglich der Zementstabilität und Einfluß auf das Zementabbindeverhalten der Redispersion wurde kein Unterschied zur Pulverbasisdispersion festgestellt.

### Vergleichsbeispiel 4:

Die in den Beispielen 1 bis 3 verwendete Styrol-Butadien-Copolymer-Dispersion wurde mit einer wässrigen 10 Gew.-%igen Natronlauge auf pH 7.0 eingestellt und anschließend ohne die Zugabe von Citronensäure oder Na-Polyacrylat sprühgetrocknet. Die Dispersion wies bei einem Festkörpergehalt von 45 % eine Viskosität (Brookfield-Viskosimeter, 20°C, 20 Upm) von 350 mPas auf. Die Sprühtrocknung der Dispersion sowie die Zugabe des Antiblockmittels erfolgte analog Beispiel 1.
Das erhaltene Pulver wies eine mittlere Teilchengröße von 87 µm auf. Das Pulver war in Wasser nicht redispergierbar. Durch Zugabe von Wasser änderte sich die Teilchengröße von 87 µm nicht.

### Vergleichsbeispiel 5:

Die Herstellung erfolgte analog Beispiel 1, allerdings wurden die Mengen an Styrol-Butadien-Copolymer-Dispersion und Citronensäure so gewählt, daß eine Mischung mit einem Festanteil von 2 Gew.-% (2.1 Gew.-% bezogen auf Polymeranteil) Citronensäure und 98 Gew.-% filmbildendes Polymer (Harz) erhalten wurde. Alle anderen Maßnahmen entsprachen Beispiel 1. Man erhielt eine stabile, koagulatfreie Mischung, die bei einem Festkörpergehalt von 44.5 % eine Viskosität (Brookfield-Viskosimeter, 20°C, 20 Upm) von 330 mPas aufwies. Die Sprühtrocknung des Gemisches sowie die Zugabe des Antiblockmittels erfolgte analog Beispiel 1.
Das erhaltene Pulver wies eine mittlere Teilchengröße von 85 *µ*m auf. Das Pulver war in Wasser nicht redispergierbar. Durch Zugabe von Wasser änderte sich die Teilchengröße von 85 *µ*m nicht.

## Patentansprüche

1. Verfahren zur Herstellung von in Wasser redispergierbaren Vinylaromat-Mischpolymerisat-Redispersionspulvern mittels radikalisch initiierter Emulsionspolymerisation eines Comonomergemisches enthaltend
a) ein oder mehrere Vinylaromat-Comonomere,
b) ein oder mehrere 1,3-Dien-Comonomere (b1) oder ein oder mehrere Comonomere (b2) aus der Gruppe der Alkylester mit 1 bis 8 C-Atomen von Acrylsäure oder Methacrylsäure, und
c) 0.1 bis 10 Gew.-%, bezogen auf das Gesamtgewicht des Comonomergemisches, ein oder mehrere Comonomere aus der Gruppe der ethylenisch ungesättigen Mono- oder Dicarbonsäuren oder deren Anhydride, der ethylenisch ungesättigten Carbonsäureamide, der ethylenisch ungesättigten Sulfonsäureverbindungen, sowie jeweils deren Salze,
und Trocknung der damit erhältlichen wässrigen Copolymerdispersion, wobei vor oder während der Polymerisation oder vor der Trocknung zur wässrigen Copolymerdispersion noch ein oder mehrere Hydroxycarbonsäuren oder deren Salze in einer Menge von 3 bis 40 Gew.-%, bezogen auf den Copolymeranteil, zugegeben werden.

2. Verfahren nach Anspruch 1, dadurch gekennzeichnet, daß 20.0 bis 79.9 Gew.-% Vinylaromat a) und 20 bis 79.9 Gew.-% 1,3-Dien (b1) oder (Meth)acrylsäureester (b2) copolymerisiert werden.

3. Verfahren nach Anspruch 1 oder 2, dadurch gekennzeichnet, daß als Vinylaromatcomonomer a) Styrol copolymerisiert wird.

4. Verfahren nach Anspruch 1 bis 3, dadurch gekennzeichnet, daß als Comonomer (b1) 1,3-Butadien oder als Comonomer (b2) ein oder mehrere aus der Gruppe umfassend Methylmethacrylat, Methylacrylat, n-Butylmethacrylat, n-Butylacrylat, Ethylmethacrylat, Ethylacrylat, 2-Ethylhexylmethacrylat, 2-Ethylhexylacrylat copolymerisiert werden.

5. Verfahren nach Anspruch 1 bis 4, dadurch gekennzeichnet, daß als Comonomer c) ein oder mehrere aus der Gruppe umfassend Acrylsäure, Methacrylsäure, Fumarsäure, Itaconsäure, Crotonsäure, Maleinsäure, Mesaconsäure, Glutarsäure, Maleinsäureanhydrid, Acrylamid, Methacrylamid, Vinylsulfonsäure, 2-Acrylamidopropansulfonsäure copolymerisiert werden.

6. Verfahren nach Anspruch 1 bis 5, dadurch gekennzeichnet, daß als Hydroxycarbonsäuren Monohydroxy- und Dihydroxyderivate von Mono-, Di- oder Tricarbonsäuren mit 2 bis 10 C-Atomen oder deren Natriumsalze, Kaliumsalze, Ammoniumsalze oder Calciumsalze zugegeben werden.

7. Verfahren nach Anspruch 6, dadurch gekennzeichnet, daß als Hydroxycarbonsäuren ein oder mehrere aus der Gruppe umfassend Mandelsäure (Hydroxyphenylessigsäure), Milchsäure (2-Hydroxypropionsäure), Äpfelsäure (Hydroxybernsteinsäure), Weinsäure (2,3-Dihydroxybutandisäure) und Citronensäure (2-Hydroxy-1,2,3-propantricarbonsäure) zugegeben werden.

8. Verfahren nach Anspruch 1 bis 7, dadurch gekennzeichnet, daß der Anteil an Hydroxycarbonsäure 7 bis 30 Gew.-%, bezogen auf den Copolymeranteil, beträgt.

9. Verwendung der Verfahrensprodukte nach Anspruch 1 bis 8 in bauchemischen Produkten in Verbindung mit anorganischen, hydraulisch abbindenden Bindemitteln wie Zement, Gips, Wasserglas, für die Herstellung von Bauklebern, Putzen, Spachtelmassen, Fußbodenspachtelmassen, Betonreparaturmörtel, Fugenmörtel und Farben.

10. Verwendung der Verfahrensprodukte nach Anspruch 1 bis 8 als Alleinbindemittel für Beschichtungsmittel und Klebemittel.

11. Verwendung der Verfahrensprodukte nach Anspruch 1 bis 8 als Beschichtungs- und Bindemittel für Textilien und Papier.

## Claims

1. Process for the preparation of vinylaromatic copolymer redispersion powders redispersible in water by means of free-radical emulsion polymerization of a comonomer mixture comprising
a) one or more vinylaromatic comonomers
b) one or more 1,3-diene comonomers (b1) or one or more comonomers (b2) from the group consisting of the alkyl esters having 1 to 8 C atoms of acrylic acid or methacrylic acid and
c) 0.1 to 10% by weight, based on the total weight of the comonomer mixture, one or more comonomers from the group consisting of the ethylenically unsaturated mono- or dicarboxylic acids or the anhydrides thereof, the ethylenically unsaturated carboxamides, the ethylenically unsaturated sulphonic acid compounds and in each case the salts thereof, and drying of the aqueous copolymer dispersion obtainable thereby, one or more hydroxycarboxylic acids or the salts thereof being added to the aqueous copolymer dispersion in an amount of 3 to 40% by weight, based on the amount of copolymer, before or during the polymerization or before the drying.

2. Process according to Claim 1, characterized in that 20.0 to 79.9% by weight of vinylaromatic a) and 20 to 79.9% by weight of 1,3-diene (b1) or (meth)acrylate (b2) are copolymerized.

3. Process according to Claim 1 or 2, characterized in that the styrene is copolymerized as vinylaromatic comonomer a).

4. Process according to Claims 1 to 3, characterized in that 1,3-butadiene is copolymerized as comonomer (b1) or one or more comonomers from the group consisting of methyl methacrylate, methyl acrylate, n-butyl methacrylate, n-butyl acrylate, ethyl methacrylate, ethyl acrylate, 2-ethylhexyl methacrylate and 2-ethylhexyl acrylate are copolymerized as comonomer (b2).

5. Process according to Claims 1 to 4, characterized in that one or more comonomers from the group consisting of acrylic acid, methacrylic acid, fumaric acid, itaconic acid, crotonic acid, maleic acid, mesaconic acid, glutaric acid, maleic anhydride, acrylamide, methacrylamide, vinylsulphonic acid and 2-acrylamidopropanesulphonic acid are copolymerized as comonomer c).

6. Process according to Claims 1 to 5, characterized in that monohydroxy and dihydroxy derivatives of mono-, di- or tricarboxylic acids having 2 to 10 C atoms or the sodium salts, potassium salts, ammonium salts or calcium salts thereof are added as hydroxycarboxylic acids.

7. Process according to Claim 6, characterized in that one or more hydroxycarboxylic acids from the group consisting of mandelic acid (hydroxyphenylacetic acid), lactic acid (2-hydroxypropionic acid), malic acid (hydroxysuccinic acid), tartaric acid (2,3-dihydroxybutanedioic acid) and citric acid (2-hydroxy-1,2,3-propanetricarboxylic acid) are added as hydroxycarboxylic acids.

8. Process according to Claims 1 to 7, characterized in that the amount of hydroxycarboxylic acid is 7 to 30% by weight, based on the amount of copolymer.

9. Use of the products of the process according to Claims 1 to 8 in chemical products for the construction industry in combination with inorganic, hydraulically setting binders, such as cement, plaster or water glass, for the production of construction adhesives, renders, filling compounds, floor filling compounds, concrete repair mortars, joint mortars and paints.

10. Use of the products of the process according to Claims 1 to 8 as sole binders for coating materials and adhesives.

11. Use of the products of the process according to Claims 1 to 8 as coating materials and binders for textiles and paper.

## Revendications

1. Procédé pour la préparation de poudres pour redispersion de copolymères vinylaromatiques aptes à la redispersion dans l'eau, par polymérisation en émulsion, amorcée par voie radicalaire, d'un mélange de comonomères contenant
a) un ou plusieurs comonomères vinylaromatiques,
b) un ou plusieurs comonomères 1,3-diène (b1) ou un ou plusieurs comonomères (b2) choisis dans le groupe des esters alkyliques, ayant de 1 à 8 atomes de carbone, d'acide acrylique ou d'acide méthacrylique, et 0,1 à 10 % en poids, par rapport au mélange total du mélange de comonomères, d'un ou plusieurs comonomères choisis dans le groupe des acides mono- ou dicarboxyliques à insaturation éthylénique ou de leurs anhydrides, des carboxamides à insaturation éthylénique, des composés de type acide sulfonique à insaturation éthylénique, ainsi que, respectivement, de leurs sels,
et séchage de la dispersion aqueuse de copolymères ainsi obtenue, un ou plusieurs acides hydroxycarboxyliques ou leurs sels étant encore ajoutés à la dispersion aqueuse de copolymères, en une quantité de 3 à 40 % en poids, par rapport à la quantité de copolymères, avant ou pendant la polymérisation ou avant le séchage.

2. Procédé selon la revendication 1, caractérisé en ce que 20,0 à 79,9 % en poids de composé vinylaromatique a) et 20 à 79,9 % en poids de 1,3-diène (b1) ou d'ester d'acide (méth)acrylique (b2) sont copolymérisés.

3. Procédé selon la revendication 1 ou 2, caractérisé en ce que du styrène est copolymérisé en tant que comonomère vinylaromatique a).

4. Procédé selon l'une quelconque des revendications 1 à 3, caractérisé en ce que sont copolymérisés en tant que comonomère (b1) du 1,3-butadiène ou, en tant que comonomère (b2), un ou plusieurs composés choisis dans le groupe comprenant le méthacrylate de méthyle, l'acrylate de méthyle, le méthacrylate de n-butyle, l'acrylate de n-butyle, le méthacrylate d'éthyle, l'acrylate d'éthyle, le méthacrylate de 2-éthylhexyle, l'acrylate de 2-éthylhexyle.

5. Procédé selon l'une quelconque des revendications 1 à 4, caractérisé en ce qu'un ou plusieurs composés choisis dans le groupe comprenant l'acide acrylique, l'acide méthacrylique, l'acide fumarique, l'acide itaconique, l'acide crotonique, l'acide maléique, l'acide mésaconique, l'acide glutarique, l'anhydride maléique, l'acrylamide, le méthacrylamide, l'acide vinylsulfonique, l'acide 2-acrylamidopropanesulfonique sont copolymérisés en tant que comonomère c).

6. Procédé selon l'une quelconque des revendications 1 à 5, caractérisé en ce qu'on ajoute en tant qu'acides hydroxycarboxyliques des dérivés mono-hydroxylés ou dihydroxylés d'acides mono-, di- ou tricarboxyliques ayant de 2 à 10 atomes de carbone ou de leurs sels de sodium, sels de potassium, sels d'ammonium ou sels de calcium.

7. Procédé selon la revendication 6, caractérisé en ce que qu'on ajoute en tant qu'acides hydroxycarboxyliques un ou plusieurs composés choisis dans le groupe comprenant l'acide mandélique (acide hydroxyphénylacétique), l'acide lactique (acide 2-hydroxypropionique), l'acide malique (acide hydroxysuccinique), l'acide tartrique (acide 2,3-dihydroxybutanedioïque) et l'acide citrique (acide 2-hydroxy-1,2,3-propanetricarboxylique).

8. Procédé selon l'une quelconque des revendications 1 à 7, caractérisé en ce que la proportion de l'acide hydroxycarboxylique va de 7 à 30 % en poids, par rapport à la quantité de copolymères.

9. Utilisation des produits du procédé selon l'une quelconque des revendications 1 à 8, dans des produits chimiques pour le bâtiment, en association avec des liants minéraux à prise hydraulique tels que le ciment, le plâtre, le verre soluble, pour la fabrication de colles pour le bâtiment, d'enduits, de mastics, d'enduits pour sols, de mortiers de réparation pour béton, de mortiers de jointoiement et de peintures.

10. Utilisation des produits du procédé selon l'une quelconque des revendications 1 à 8, en tant que liant unique pour des produits de revêtement et des adhésifs.

11. Utilisation des produits du procédé selon l'une quelconque des revendications 1 à 8, en tant que liant et produit d'enduction pour textiles et papiers.
